# EUROPEAN PATENT SPECIFICATION

(11) **EP 2 278 314 B1**
(45) Date of publication and mention of the grant of the patent: **17.12.2014**
(21) Application number: 10168012.2
(22) Date of filing: 30.06.2010
(51) Int. Cl.: G01N 27/30, G01N 27/49, G01N 27/404

(54) **Electro-chemical cell and method of providing multiple electrical connections to a lead anode or an electro-chemical gas sensing cell**
Elektrochemische Zelle und Verfahren zur Bereitstellung mehrerer elektrischer Verbindungen zu einer Bleianode oder einer elektrochemischen Gassensorzelle
Cellule électrochimique et procédé de fourniture de plusieurs connexions électriques à une anode de plomb ou à une cellule de détection de gaz électro-chimique

(30) Priority: 09.07.2009 US 224265 P; 28.06.2010 US 824273
(43) Date of publication of application: 26.01.2011
(73) Proprietor: Life Safety Distribution AG, 8610 Uster (CH)
(72) Inventor: McLeod, Ian Andrew, Morristown NJ 07962-2245 (US); Williamson, Martin, Morristown NJ 07962-2245 (US); Croft, Ernie, Morristown, NJ 07962-2245 (US)
(74) Representative: Buckley, Guy Julian

(56) References cited:
- WO-A1-2004/031758
- US-A- 3 929 588
- US-A- 4 367 133

## Description

### CROSS-REFERENCE TO RELATED APPLICATION

This application claims the benefit of the filing date of U.S. Provisional Application Serial No. 61/224,265 filed July 9, 2009 and entitled "Method of Making Multiple Electrical Connections to Lead Wool Strands within the Lead Anode of an Oxygen Sensing Cell within an Oxidizing Environment". The '265 application is hereby incorporated herein by reference.

### FIELD

The invention pertains to electro-chemical gas sensing cells. More particularly, the invention pertains to such cells where one or more fused connections can be provided between lead wool anodes and an associated current collector.

### BACKGROUND

Various types of oxygen sensors are known which incorporate lead wool anodes. These include, without limitation, US Patent No. 4,132,616 entitled, "Gas Sensor" which issued January 2, 1979, and US Patent No. 4,324,632 entitled "Gas Sensor" which issued April 13, 1982. Both the '616 and the '632 patents are assigned to City Technology Limited.

"Glitching" which is also known as Thermal shock in an oxygen cell can be removed by the addition of a vent in the body molding of the cell. This vent is in the form of a small laser drilled hole. Its function is to balance pressure differences within the cell experienced during transition of the cell between different ambient temperatures / pressures.

By venting the body molding the vent hole provides an alternative gas path to the inside of the cell. Without the vent hole the only path is that of the capillary hole in the cap which exposes the working electrode to an increased gas flow to during the transition to pressure equilibrium, this has the effect of an enhanced cell output that is miss interpreted by an instrument as an increase or decrease in Oxygen concentration this unpredicted change is referred to as a "Glitch".

The addition of a vent hole creates another problem within the oxygen cell, as normally this environment is anaerobic due to the fact that the only gas path into the cell is via the capillary hole located in the top cap. With a vent in the lower half of the cell this environment becomes aerobic and build up of lead oxide on the surface of the lead wool anode is promoted which in turn creates an electrical connection breakdown between the anode current collector and the lead anode. In non vented cells all oxidation occurs directly below the capillary hole and working electrode and continues downwards in a conical pattern leaving the outer surface of the lead anode un oxidized until eventually all lead is oxidized and the cell reaches end of life.

Contact between interconnected lead strands within the lead anode (made from lead wool) and external electrical connections is normally created by a nickel foil (current collector) in a pressure contact with a nickel or stainless steel mesh that is in turn connected to the lead anode, again via a pressure connection. The Mesh provides multiple points of contact across the lead and so in a non-vented cell provides good electrical connection with the lead anode up to the point of just before total lead oxidation. With a vented cell surface oxidation interferes with the electrical contact between the mesh and the lead anode before total lead oxidation occurs.

In connection with unvented sensors, there is a possibility that undesirable reaction products in an unvented sensor could still prematurely shorten the sensor life by destroying anode interconnectivity near the normal end of life calculated on the basis of electrochemical consumption (albeit by a different mechanism to the main one discussed here). In effect, what has been considered to be lead exhaustion may in fact be a manifestation of loss of connectivity, albeit in a controlled way which results from a gradual wave front of lead consumption moving through the sensor

There is a need to improve connectivity between lead wool anodes and external electrical connections.

### BRIEF DESCRIPTION OF THE DRAWINGS

Fig. 1 is a diagram illustrating one embodiment of a structure and method in accordance with the invention;
Fig. 2A is a diagram illustrating a second embodiment of a structure and method in accordance with the invention;
Fig. 2B is a diagram illustrating another embodiment of a structure and method in accordance with the invention; and
Fig. 3 is a diagram illustrating a different embodiment of a structure and method in accordance with the invention.

### DETAILED DESCRIPTION

While embodiments of this invention can take many different forms, specific embodiments thereof are shown in the drawings and will be described herein in detail with the understanding that the present disclosure is to be considered as an exemplification of the principles of the invention, as well as the best mode of practicing same, and is not intended to limit the invention to the specific embodiment illustrated.

It is desirable to ensure that the interconnected lead strands of a lead wool anode are bonded to the current collector. In one aspect of the invention, this can be achieved by the use of a fused connection as an improvement to the current pressure connections. The fused connections will exclude oxygen from the current collector- lead anode interface. Such connections can also be expected to be useful in unvented sensors, or cells.

In one embodiment, a ribbon current collector can be trapped between lead wool and a metal mesh during formation of an anode. Flux can then be applied to the anode being formed. The anode being formed can then be dipped into a solder bath, for example a tin-lead solder bath. Those of skill will understand that other forms of bonding, some of which are discussed below, come within the scope of the invention.

The formation of the anode can be finished by using heat, from a heat gun, to reflow excess solder. Then anode can then be washed in de-ionized water to remove any remaining flux. In an anode so formed, the metal current collector is fused to the lead wool. Alternately, the collector can be resistance welded to the mesh and/or the lead wool.

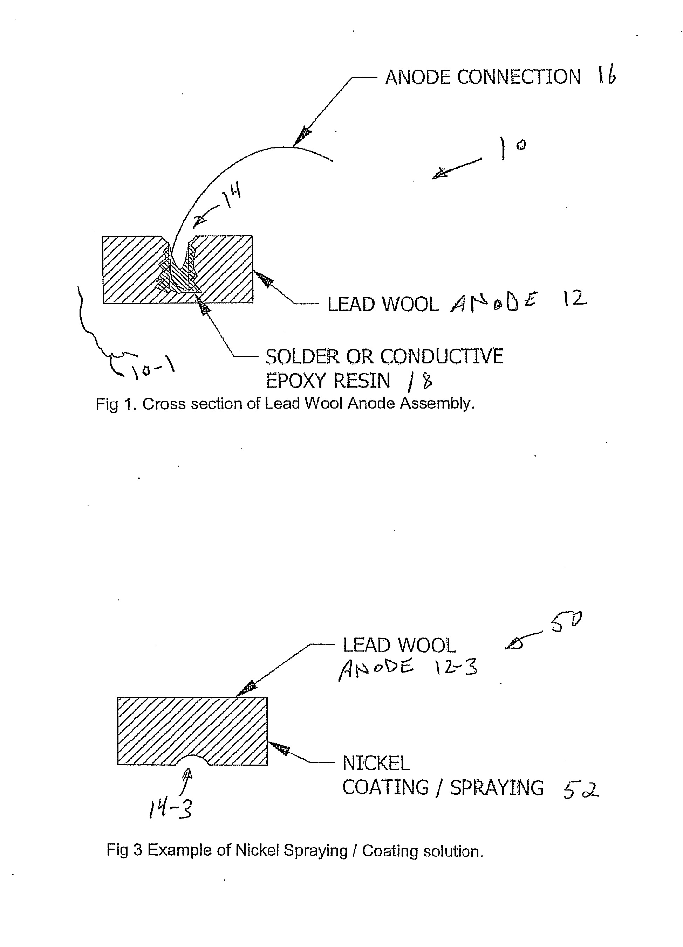

Fig. 1 illustrates a fused connection structure 10 for an anode 12 of an electro-chemical cell or sensor. A cavity 14. or multiple cavities of suitable diameter, diameters can range from 1 mm up to the diameter of the lead wool anode12, are drilled or formed in the lead anode 12 to a depth of up to the depth of the lead wool anode.

A portion of a current collector 16, external anode connection, made from an electrically conductive material is placed into the cavity 14. The current collector 16 can be implemented in as a wire or foil.

A conductive medium 18 is inserted into the cavity 14. Exemplary conductive mediums may include solder paste, solder wire, metal loaded epoxy resins all without limitation. A process to form the fused electrical connection between the lead anode 12 and the current collector 16 is then undertaken. For example, wave soldering can provide such a fused connection. Alternately, electrical, such as resistance welding, or chemical methods of fusion all without limitation can be used.. Elements 12-18 can be carried in a housing 10-1 and implemented as an electro-chemical sensor, such as an oxygen sensor.

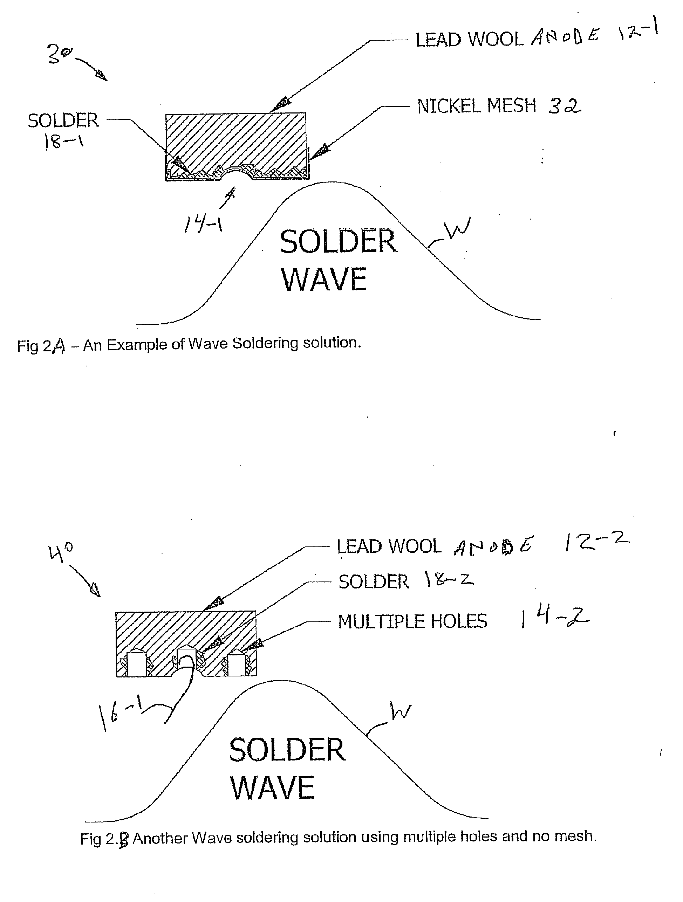

Fig. 2A illustrates a different fused structure 30. A cavity, such as 14-1, or multiple cavities of a suitable diameter, can be drilled or otherwise formed into the lead anode 12-1. The diameter of the cavity 14-1 can range from 1 mm up to the diameter of the lead wool anode 12-1. An electrically conductive mesh, such as a nickel mesh 32, may also be attached to the anode 12-1 at this stage.

A conductive medium 18-1 is applied to the cavity 14-1 and surface area of the lower half of the lead anode 12-1. Conductive mediums may include solder paste, solder wire, metal loaded epoxy resins all without limitation.

A process to form a fused electrical connection between the lead anode 12-1 and the conductive medium 18-1 is then carried out. This may involve flow soldering via a re-flow oven if using solder paste, a wave soldering process W as illustrated in Fig. 2A, or any other form of fusing.

Another embodiment of the invention is illustrated in Fig. 2B. In structure 40, multiple openings, holes or depressions 14-2 are formed in the lead wool 12-2. Wave soldering W can be used to make fused connections between the lead wool 12-2 and a respective collector, such as metallic element 16-1 in the absence of mesh.

In the embodiment and structured 50 of Fig. 3, the lead wool anode 12-3 can be surface treated to remove oxide and then plated with an electrically conductive material 52, for example nickel. This plating process may be implemented as electrical or chemical plating. The coating, or plating, 52 may also be applied via spray coating techniques such as nickel spraying. The respective collector, for example metallic member 16-1, illustrated in Fig. 2b, can be soldered to the nickel coating in the depression 14-3 or anywhere else on the metallic coating 52 to provide an external connector.

As those of skill in the art will understand, the lead anode, from lead wool strands, is formed by pressing the wool strands into a finished shape using a pressing and forming tool. This pressing operation can be performed in an orientation and sequence such that it minimizes the solder uptake into the lead during the soldering operation. During this pressing operation the pressing tool presses the top of the anode into the forming tool. The pressing tool then presses upwards from the bottom of the forming tool to press the anode into its final form.

With anodes that have a fitted metal mesh the mesh is pre formed prior to use to ensure correct coverage of the base of the anode. Prior to soldering a flux is applied to the lead using a mask to ensure that solder is applied and fuses only to areas where it is required since the solder will not fuse to the lead without the flux.

For operation of the finished senor that all residual flux should be removed. A washing process using deionized water can be used to flush through the lead strands. During the washing process the conductivity of the water can be measured to determine that all flux has been successfully removed from the anode.

A drying process can be used to ensure all moisture from the washing process is removed. A tunnel oven can be used for drying. Solder coverage of the anode may vary from full coverage to part coverage of the base/side walls.

Those of skill will understand that all alternates to soldering, which produce fused, conductive, connections, come within the scope of the invention.

## Claims

1. An electro-chemical sensor comprising:
a lead wool conductive electrode; and
a metallic collector where the collector is fused, at least in part, to the conductive electrode.

2. A sensor as in claim 1 where the conductive electrode comprises a sensor anode.

3. A sensor as in claim 1 where the electrode exhibits at least one collector receiving cavity.

4. A sensor as in claim 3 where a portion of the collector is fused to a portion of the lead wool.

5. A sensor as in claim 4 where a fusion method is selected from a class which includes at least thermal fusion, electrical fusion, chemical fusion.

6. A sensor as in claim 4 where the electrode carries a metallic mesh.

7. A sensor as in claim 6 where the collector is positioned, at least in part between the electrode and a portion of the mesh.

8. A sensor as in claim 7 where the collector is fused to a portion of the electrode and a portion of the mesh.

9. A sensor as in claim 8 where a fusion method is selected from a class which includes at least thermal fusion, electrical fusion, chemical fusion.

10. A sensor as in claim 3 where a portion of the collector is located in the cavity.

11. A sensor as in claim 10 where a portion of the collector is fused to the electrode in the cavity and where a fusion method is selected from a class which includes at least thermal fusion, electrical fusion, chemical fusion.

12. A sensor as in claim 11 which includes a hollow housing which carries the electrode and a portion of the collector in the housing.

13. A sensor as in claim 12 configured as an oxygen sensor.

14. A method comprising:
providing a lead wool anode element;
forming at least one depression therein;
providing a metallic conductive element;
inserting part of the element in the cavity; and
fusing the part of the conductive element to part of the lead wool.

15. A method as in claim 14 which includes providing one of a metallic mesh and attaching it to the anode element, or coating at least part of the anode element.

## Patentansprüche

1. Elektrochemischer Sensor, der Folgendes umfasst:
eine leitende Bleiwolleelektrode; und
einen Metallkollektor, wobei der Kollektor wenigstens teilweise auf die leitende Elektrode aufgeschmolzen ist.

2. Sensor nach Anspruch 1, wobei die leitende Elektrode eine Sensoranode umfasst.

3. Sensor nach Anspruch 1, wobei die Elektrode wenigstens einen Kollektoraufnahmehohlraum zeigt.

4. Sensor nach Anspruch 3, wobei ein Abschnitt des Kollektors auf einen Abschnitt der Bleiwolle aufgeschmolzen ist.

5. Sensor nach Anspruch 4, wobei ein Aufschmelzverfahren aus einer Klasse gewählt ist, die wenigstens thermisches Aufschmelzen, elektrisches Aufschmelzen und chemisches Aufschmelzen enthält.

6. Sensor nach Anspruch 4, wobei die Elektrode ein Metallgeflecht trägt.

7. Sensor nach Anspruch 6, wobei der Kollektor wenigstens teilweise zwischen der Elektrode und einem Abschnitt des Geflechts positioniert ist.

8. Sensor nach Anspruch 7, wobei der Kollektor auf einen Abschnitt der Elektrode und auf einen Abschnitt des Geflechts aufgeschmolzen ist.

9. Sensor nach Anspruch 8, wobei ein Aufschmelzverfahren aus einer Klasse gewählt ist, die wenigstens thermisches Aufschmelzen, elektrisches Aufschmelzen, chemisches Aufschmelzen enthält.

10. Sensor nach Anspruch 3, wobei ein Abschnitt des Kollektors in dem Hohlraum gelegen ist.

11. Sensor nach Anspruch 10, wobei ein Abschnitt des Kollektors auf die Elektrode in dem Hohlraum aufgeschmolzen ist und wobei ein Aufschmelzverfahren aus einer Klasse gewählt ist, die wenigstens thermisches Aufschmelzen, elektrisches Aufschmelzen, chemisches Aufschmelzen enthält.

12. Sensor nach Anspruch 11, der ein hohles Gehäuse enthält, das die Elektrode und einen Abschnitt des Kollektors in dem Gehäuse trägt.

13. Sensor nach Anspruch 12, der als ein Sauerstoffsensor konfiguriert ist.

14. Verfahren, das Folgendes umfasst:
Bereitstellen eines Bleiwolleanodenelements;
Bilden wenigstens einer Vertiefung darin;
Bereitstellen eines leitenden Metallelements;
Einführen eines Teils des Elements in den Hohlraum; und
Aufschmelzen des Teils des leitenden Elements auf einen Teil der Bleiwolle.

15. Verfahren nach Anspruch 14, das das Bereitstellen eines Metallgeflechts und sein Befestigen an dem Anodenelement oder das Beschichten wenigstens eines Teils des Anodenelements enthält.

## Revendications

1. Capteur électrochimique comprenant :
une électrode conductrice en laine de plomb ; et
un collecteur métallique, le collecteur étant fusionné, au moins en partie, à l'électrode conductrice.

2. Capteur selon la revendication 1 dans lequel l'électrode conductrice comprend une anode de détection.

3. Capteur selon la revendication 1 dans lequel l'électrode présente au moins une cavité de réception de collecteur.

4. Capteur selon la revendication 3 dans lequel une partie du collecteur est fusionnée à une partie de la laine de plomb.

5. Capteur selon la revendication 4 dans lequel un procédé de fusion est choisi dans une classe qui comporte au moins la fusion thermique, la fusion électrique, la fusion chimique.

6. Capteur selon la revendication 4 dans lequel l'électrode porte un treillis métallique.

7. Capteur selon la revendication 6 dans lequel le collecteur est positionné, au moins en partie, entre l'électrode et une partie du treillis.

8. Capteur selon la revendication 7 dans lequel le collecteur est fusionné à une partie de l'électrode et une partie du treillis.

9. Capteur selon la revendication 8 dans lequel un procédé de fusion est choisi dans une classe qui comporte au moins la fusion thermique, la fusion électrique, la fusion chimique.

10. Capteur selon la revendication 3 dans lequel une partie du collecteur est située dans la cavité.

11. Capteur selon la revendication 10 dans lequel une partie du collecteur est fusionnée à l'électrode dans la cavité et dans lequel un procédé de fusion est choisi dans une classe qui comporte au moins la fusion thermique, la fusion électrique, la fusion chimique.

12. Capteur selon la revendication 11 qui comporte un logement creux qui porte l'électrode et une partie du collecteur dans le logement.

13. Capteur selon la revendication 12 configuré comme un capteur d'oxygène.

14. Procédé comprenant :
l'obtention d'un élément d'anode en laine de plomb ;
la formation d'au moins un creux dans celui-ci ;
l'obtention d'un élément conducteur métallique ;
l'insertion d'une partie de l'élément dans la cavité ; et
la fusion de la partie de l'élément conducteur à une partie de la laine de plomb.

15. Procédé selon la revendication 14 qui comporte l'obtention d'un treillis métallique et sa fixation à l'élément d'anode, ou le revêtement d'au moins une partie de l'élément d'anode.
